Europäisches Patentamt

(19) **European Patent Office**

Office européen des brevets

(11) Publication number: **0 001 762**

A1

(12) # EUROPEAN PATENT APPLICATION

(21) Application number: 78101105.1

(22) Date of filing: 09.10.78

(51) Int. Cl.²: **F 16 D 69/04**

(30) Priority: 09.11.77 US 849930

(43) Date of publication of application:
16.05.79 Bulletin 79/10

(84) Designated contracting states:
DE FR GB

(71) Applicant: The B.F. GOODRICH Company
Dept. 0015 WHB-6 500 South Main Street
Akron, Ohio 44318(US)

(72) Inventor: McMaken, Thomas Michael
1554 Leedes Road
Troy, Ohio 45373(US)

(74) Representative: Baillie, Iain Cameron et al,
c/o Ladas, Parry, von Gehr. Goldsmith & Deschamps
Blumenstrasse 48
D-8000 München 2(DE)

(54) **Mounting of friction pads in a disc brake.**

(57) A caliper or spot type disc brake utilizes a caliper assembly having friction pads engageable with opposite surface portions of a rotatable brake disc. At least one of the friction pads (30) is secured to an axially movable piston member (32) by means of a dovetail connection wherein the dovetail contoured groove or slot (64) is provided on the piston member (32) and the dovetail contoured projection is provided on the friction pad (30).

Fig.1

EP 0 001 762 A1

CALIPYER TYPE DISC BRAKE

## BACKGROUND

The invention relates to disc brakes and particularly to caliper or spot type disc brakes.

In caliper type disc brakes assemblies, the brake rotor normally includes a rotatable brake disc which is engaged by a brake stator at opposite surface portions or "spots" on the disc during braking action. The brake stator normally is in the form of a caliper member which straddles a radially outer portion of the disc and houses at least one pair of oppositely directed friction members movable into and out of engagement with opposite surface portions of the rotatable disc.

The friction members housed within the caliper usually comprise a pad of friction material mounted to some type of carrier which is adapted for axial movement relative to the rotatable brake disc. Also, usually at least one of the carriers for the friction pads is a piston member movable within a cylinder by the pressure of fluid introduced into the cylinder or by mechanical actuation.

The mounting of friction pads to piston members is presently achieved in a variety of ways usually depending upon the pad material. Commonly, the rear face of a pad of organic material is secured to the front face or end of the piston member by a suitable adhesive. Alternately, a pad of inorganic material may be secured by bolts passing through the pad and into the end of the piston member. None of the presently known techniques for securing friction pads to the ends of movable pistons for use in a caliper have been entirely satisfactory. The high mechanical and thermal stresses to which these brakes can become subject often adversely affect the interconnection between a friction pad and piston. Also, pads secured by present techniques appear to undergo tensile stresses during operation resulting in friction pad cracking or breaking or in separation of the pad from the piston.

## SUMMARY

It is an object of the present invention to provide a caliper type disc brake assembly with caliper friction members of improved construction.

It is a further object to provide a caliper type disc brake wherein the friction pads of the caliper are secured to piston type carriers in an improved manner.

These and other objects evident from the complete written description presented herein are achieved by a caliper member for a caliper type disc brake which has one or more friction pads secured to the ends of piston members by a dovetail connection. This dovetail connection is effected by providing a dovetail contoured groove in the forward end of the piston member adapted to snugly receive a dovetail contoured projection formed on the rear end or face of the friction pad. This type of connection reduces the tendency for brake pad cracking or breaking as is frequently present in other types of connection. Also, because the connection can be made without use of adhesives, breakdown of the connection due to thermal degradation is not a problem. Furthermore, replacement of pads secured to piston members by dovetail connection according to the invention can be made quickly and easily.

## THE DRAWINGS

In the accompanying sheet of drawing, the present invention is shown in the form of a presently preferred embodiment wherein:

Fig. 1 is an axial cross-section through a portion of a caliper type disc brake with parts being omitted and/or shown in section; and

Fig. 2 is a pictorial perspective view of a portion of a friction member used in the assembly shown in Fig. 1.

## DETAILED DESCRIPTION

The present invention can be described according to a presently preferred embodiment by reference to the accompanying drawings wherein like elements in the certain views are referred to by like reference characters.

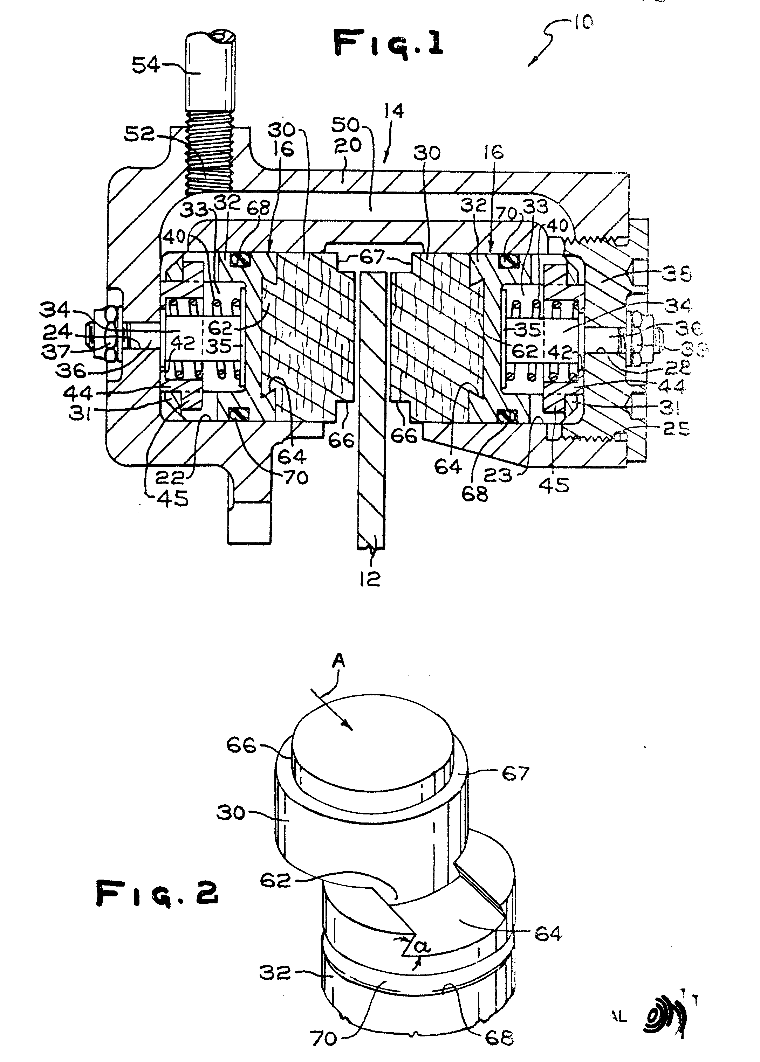

In Fig. 1, general reference character 10 designates a portion of a typical caliper type disc brake assembly comprising a rotatable disc 12 (only a part of which is shown) and a caliper member 14 straddling a radially outer portion of disc 12.

The caliper member 14 includes a main housing portion 20 provided with a pair of opposed, co-axial bores 22 and 23 which define cylindrical pressure fluid chambers A smaller diameter opening 24 is provided through housing 20 at the rear of bore 22 while a larger diameter opening 25 is provided through housing 20 at the rear of bore 23.

Mounted within each of the cylindrical bores 22 and 23 of caliper housing 20 is a friction member, generally referenced 16, adapted for movement within each bore in a direction parallel to the rotational axis of the disc 12 (not shown). The friction members 16 are essentially identical and each comprises a friction pad 30 mounted on a piston 32. Each piston 32 is adapted to move relative to a stationary rod-like retainer 34 extending into a void 33 provided in each piston 32. The forward end of each retainer 34 is provided with a radially extending flange 35 which limits the extent of axial movement of the pistons rearwardly of each bore 22 and 23. A spring 40 is disposed in each piston void 33, which spring is biased between the flange 35 of each retainer 34 and a radially inward directed flange 42 of a sleeve member 44, also disposed within the voids 33 of each piston 32. Each sleeve member 44 is provided with a pair of projections 45 against which a rear flange 31 of each piston 32 bears, thus causing sleeve 44 to move axially with piston 32. The retainer 34 in bore 22 is secured to caliper housing 20 by means of an extension 36 of retainer 34 passing through opening 24 and being fitted with a nut 37. Opening 25 of housing 20 is provided with an internal surface thread pattern and is fitted with a removable plug member 38 having a central opening 28 therethrough. Provision of plug member 38 at one end of caliper housing 20 is to facilitate access to the interior of housing 20 when required, as for example, for replacement of various parts of the friction members 16. Retainer 34 within bore 23 is thus secured to housing 20 by an extension 36 thereof passing through opening 28 in plug 38 and being fitted with nut 39.

Pressure fluid is communicated to each of cylindrical bores 22 and 23 from a fluid passageway 50 formed in the radially outer portion of housing 20. Passageway 50 is provided with an inlet opening 52 threaded to receive an appropriate fitting 54 which supplies fluid to passageway 50 from a source of pressurized fluid (not shown).

As seen in Figs. 1 and 2, each friction pad 30 is mounted on the forward end of a piston 32 by means of a dovetail type interconnection. Specifically each pad 30 is proved on its rear surface with a dovetail contoured projection 62 which is adapted to fit within a dovetail contoured groove 64 formed on the forward face of piston 32. The dovetail projection 62 extends the width of the pad 30 permitting easy and secure attachment of the pad 30 to the piston 32 by a transverse sliding action indicated by the arrow A in Fig. 2. The angle a (See Fig. 2) of the dovetail groove may be of any suitable acute angle, such as 60°, which has been found satisfactory. Because of the dovetail interconnection just described, the friction pads are not subject to tensile stresses during operation but appear to undergo compressive stress thereby reducing any tendencies to cracking, etc., caused by tensile type stresses.

The friction pads 30 are preferably composed of organic type material, such as resin impregnated asbestos. However, resin impregnated material which are not strictly organic may also be used. The dovetail projection 60 can be machined from a cylindrical block of such material. Also, each pad can be machined to provide a reduced diameter portion 66 at the forward face thereof, thereby forming an annular ridge or ledge portion 67. This feature has been found useful to provide a quick reference indication of brake pad wear. When the pad wears to the extent that the annular ridge portion begins to engage the disc during braking, consideration is usually given to replacement of the friction pads.

Each piston 32 is preferably a precision casting effecting in situ formation of the dovetail groove 64 and also of an annular groove 68 for seating of an o-ring seal member 70. The part can, however, be rough cast with subsequent machining to form grooves 64 and 68.

To describe the operation of the caliper brake assembly 10, reference is made to Fig. 1, where the brake is unengaged. To engage the brake, pressurized fluid, preferably hydraulic fluid, is introduced through passageway 50 into each cylindrical bore 22 and 23 to act on piston members 32. Piston members 32 are forced axially inwardly along with their internal sleeve members 45 thereby compressing springs 40 against retainer flanges 35 and lifting the pistons from contact with the retainer sleeves. Axial movement continues until the forward faces of each of the pads engages opposite sides of the rotating disc 12 applying a braking torque thereto. Disengagement of the brakes effects a depressurization of bores 22 and 23, causing the pistons to return to their seated position against retainer flanges 35 by the action of springs 40.

Although the foregoing described the invention relative to a specific type of caliper brake assembly, it is understood that the invention finds utility in other type of caliper brake systems such as where only one of a pair of opposed friction members comprises a friction pad-piston combination of the type described or where multiple pairs of opposed fricton members are employed, more than two of the friction members may comprise friction pad-piston combination of the type herein described. It is further understood that the invention as described is susceptible to various modifications and alterations which are considered within the scope of the invention to be measured by the following claims.

**0001762**

CLAIMS


1.   In a caliper type disc brake assembly having a caliper member including at least a pair of opposed friction pads to engage opposite surface portions of a disc rotatable between the pads, and wherein at least one of said pads is mounted on the end of a piston member axially movable relative to the disc, the improvement wherein said end of said piston member is provided with a dovetail slot and at least one pad is provided with a dovetail projection received within said slot to secure said at least one pad to said piston member.

2.   The assembly defined in claim 2 wherein said at least one pad is composed of organic type material.

0001762

FIG.1

FIG.2

## EUROPEAN SEARCH REPORT

**European Patent Office**

| Category | DOCUMENTS CONSIDERED TO BE RELEVANT — Citation of document with indication, where appropriate, of relevant passages | Relevant to claim |
|---|---|---|
| X | DE - A - 2 048 584 (BERGISCHE STAHL-INDUSTRIE) <br> * claim 7 * <br> -- | 1,2 |
| X | US - A - 3 435 927 (U. VÖLKER et al) <br> * column 3, lines 51 to 53; fig. 6 * <br> -- | 1 |
| - | US - A - 2 139 409 (L.S. HUNTER) <br> * page 1, left column line 54 to right column line 6; fig. 1, 3, 6, 7 * <br> -- | 1 |
| A | US - A - 3 042 152 (H.J. BUTLER) <br> ---- | |

**CLASSIFICATION OF THE APPLICATION (Int. Cl.²)**

F 16 D 69/04

**TECHNICAL FIELDS SEARCHED (Int.Cl.²)**

F 16 D 69/00
F 16 D 69/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 03-01-1979 | LUDWIG |

EPO Form 1503.1 06.78